# EUROPEAN PATENT SPECIFICATION

(11) **EP 0 397 271 B1**
(45) Date of publication and mention of the grant of the patent: **03.03.1993**
(21) Application number: 90201169.1
(22) Date of filing: 08.05.1990
(51) Int. Cl.: B65G 47/78

(54) **A closure device for round tubes**
Verschlusseinrichtung für runde Röhren
Dispositif de fermeture pour tubes ronds

(30) Priority: 08.05.1989 NL 8901157
(43) Date of publication of application: 14.11.1990
(73) Proprietor: AERTS ELEKTRO B.V., NL-5993 NN Maasbree (NL)
(72) Inventor: Aerts, Hubertus Maria, NL-5993 NN Maasbree (NL)
(74) Representative: Hoorweg, Petrus Nicolaas

(56) References cited:
- BE-A- 630 482
- CH-A- 444 029
- DE-A- 2 940 253
- US-A- 3 077 975

## Description

The invention relates to a device for closing and opening an opening in the wall of a tube having a circular or substantially circular cross section, said device being provided with a valve member embodied as a plate of arcuate form, wherein at least one fixation element is placed under tensile stress for pressing the plate-like valve member against the outer surface of said tube, and wherein said valve member is provided with a bracket-like arm driven by an operating member.

Such a device is disclosed in US-A-3,077,975.

The invention has for its object to provide a device of the type described in the preamble wherewith closable discharge openings can be arranged in a simple manner in existing tubular piping systems. The device remains suitable, however, for use in tubular piping systems to be newly fitted.

The device according to the invention is distinguished in that said fixation element is a helical spring member formed in a closed loop urging said plate-like valve of plate-like flexible material closely against the outer surface of said tube.

As a result of the flexibility of the valve member it can be adapted easily to the differing diameters of the tubes in the piping system. The correct form is realized through use of the above described flexible tensioning members in order to press the relatively easily bendable plate against the outer wall of a tube. The flexible tensioning members make it possible to slide the plate-like valve member relative to the tube wall in axial or tangential direction, whereby the opening in the tube wall is respectively uncovered or closed.

In a preferred embodiment the valve member is provided with a bracket-like arm driven by an operating member, which arm is arranged according to a further development such that the flexible tensioning members are located within the bracket. This disposition therefore prevents the flexible element from coming loose when the slidable valve is moved.

The invention further relates to a device which is provided with a bin-like collecting element for receiving and further directing the transported material flowing out of the tube. This collecting element is placed according to the invention opposite the opening in the tube wall which can be closed and uncovered by the tangentially slidable valve. To this end the bracket protrudes beyond the receiving opening of the collecting element and the drive element embodied as cylinder is supported by the collecting element, whilst acting on said protruding section of said bracket and wherein a second tensioning spring extends between said support and said bracket.

Thus provided is an assembly unit that can be arranged easily on existing piping systems.

The invention will be further elucidated with reference to an embodiment which is shown in the annexed drawing.

In the drawing:
fig. 1 shows a perspective top view of the tangentially slidable valve with collecting bin according to the invention; and
fig. 2 shows a side view according to the arrow II in fig. 1.

Designated in the drawing with the numeral 1 is a tube which serves as transport tube for flowing material, for example powder or granular substances such as cattle feed. To this end a conveyor element in the form of a cable 2 with pusher plates 3 is arranged in the tube. This conveyor system is considered known and falls further outside the scope of the invention.

At determined positions A it may be desired to arrange an opening in existing piping systems for dispensing material to a feed bin or the like.

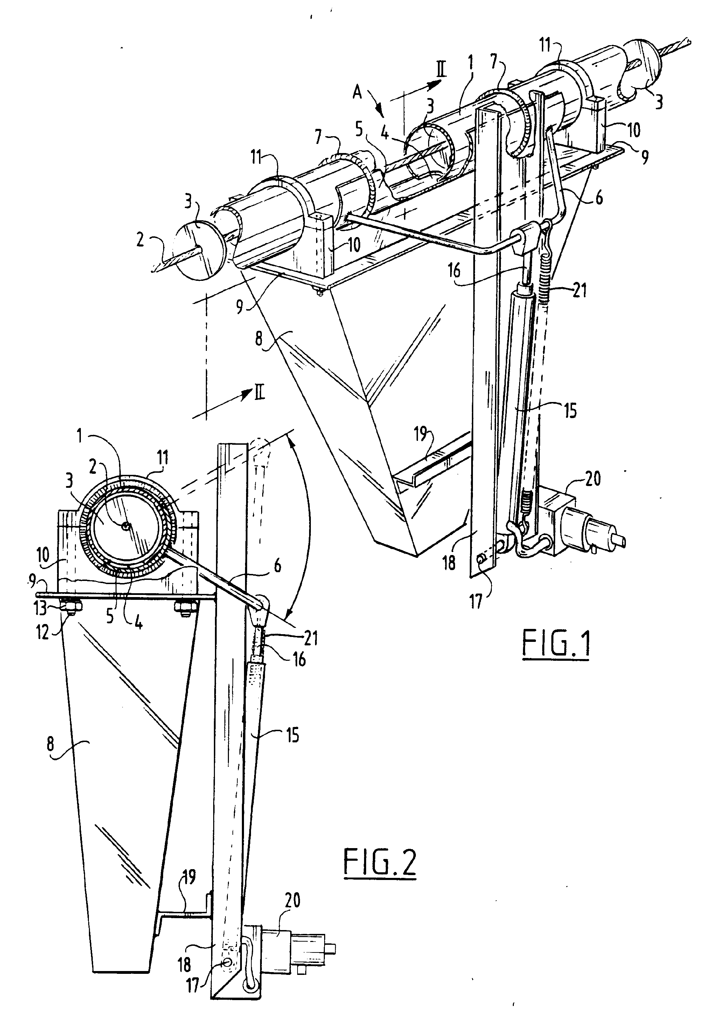

The side wall of the tube 1 is provided for this purpose with an outflow opening 4, see fig. 2, which is located in the bottom portion of the tube. The tube 4 is closed off by a plate-like valve 5 of flexible plate-like material such that the plate can adapt to the outer periphery of the tube 1. The plate 5 is longer than the lengthwise dimension of the outflow opening 4 and broader than the tangential dimension of the opening 4.

The plate-like valve 5 is provided with a bracket-like arm 6 the outer ends of which are attached close to the outer edges of the valve 5. Arranged inside the points of attachment of the arm 6 to the valve 5 are two flexible elements 7 for placing under tensile stress, which have the function of holding the plate 5 against the outer wall of the tube 1. The tensioning members are embodied here as draw springs and it will be apparent that the length and tensile stress thereof can be readily adapted to the diameter of the tube 1. The flexibility of the plate-like valve member 5 is not restricted by the attachment of the arm 6 since this is attached at only one point close to the outer ends of the plate 5.

On the underside of the tube 1 opposite the outflow opening 4 thereof is arranged a bin-shaped collecting element 8 which has a funnel-like shape. The bottom end of the collecting element is of much smaller dimensions than the top end and can be connected to a further transportation system or can terminate above a feed bin or the like. The bin-shaped collecting element 8 has a top end whereof the collecting opening is larger than the passage opening 5 of the tube 1.

The short sides 9 of the upper opening are embodied with supports 10 which are provided with arcuate brackets 11 for fixing on the tube 1. The form and fitting of the support 10 and the bracket 11 can be random, as is indicated in fig. 2, for example with screw thread ends 12 with co-acting nut 13 with which the bracket 11 and the holder 10 are held fixedly in position simultaneously.

The collecting element 8 also serves as support for a cylinder unit 15 which is embodied here as a pneumatic cylinder, whereof the cylinder rod 16 is connected to the bracket-like arm 6. The cylinder 15 is arranged rotatably at 17 in a guiding 18, which is connected via a bracket 19 to the collecting element 8 and attached at the top side to the top edge of the upper opening of the collecting element 8. The cylinder can take a pneumatic form and is provided with a control valve 20. The cylinder 15 can be single-action such that the pressure medium pushes the piston rod 16 outward out of the cylinder 15 via the control valve 20 and rotates the arm 6 anti-clockwise in fig. 2 and thus carries the valve 5 with it and frees the opening 4. For resetting the arm 6 can also be provided with a draw spring 21 the one end of which is connected to the arm 6 and the other to the support 18. Such a resetting system ensures that even when the pressure medium is lost the valve 5 will close automatically because the draw spring 21 rotates the arm 6 clockwise and therefore the plate 5 over the opening 4.

It will be apparent from the above that the valve 5 by means of the tensioning members 7 and the collecting bin 9 by means of the brackets 11 can be easily arranged in existing tubular piping systems without it being necessary to disassemble the tube 1 or having to replace it with another tube piece.

The invention is not limited to the embodiment described above.

## Claims

1. A device for closing and opening an opening (4) in the wall of a tube (1) having a circular or substantially circular cross section, said device being provided with a valve member (5) embodied as a plate of arcuate form, wherein at least one fixation element (7) is placed under tensile stress for pressing the plate-like valve member (5) against the outer surface of said tube, and wherein said valve member is provided with a bracket-like arm (6) driven by an operating member (15), **characterized in that** said fixation element (7) is a helical spring member formed in a closed loop urging said plate-like valve (5) of flexible plate-like material closely against the outer surface of said tube (1).

2. Device as claimed in claim 1, **characterized in that** the bracket-like arm (6) is a substantially U-shaped rod, the outer extremities of which are fastened to said plate-like valve (5), wherein the or each tensioning member (7) is arranged within the U-shaped bracket (6).

3. Device as claimed in any of the claims 1 and 2, provided with a bin-shaped collecting element (8) opposite the opening (4) in the wall of the tube (1), **characterized in that** the bracket (6) protrudes beyond the receiving opening of the collecting element and the drive element embodied as cylinder (15) is supported by the collecting element (8), whilst acting on said protruding section of said bracket (6) and wherein a second tensioning spring (21) extends between said support (18) and said bracket (6).

4. Device as claimed in claim 3, **characterized in that** the collecting element (8) is suspended on the tube (1) by means of mounting brackets (11).

## Patentansprüche

1. Eine Einrichtung zum Schließen und Öffnen einer Öffnung (4) in der Wand eines Rohres (1), das einen kreisförmigen oder im wesentlichen kreisförmigen Querschnitt aufweist, wobei die Einrichtung mit einem Ventilteil (5) versehen ist, das als Platte mit gebogener Form ausgeführt ist, wobei wenigstens ein Befestigungselement (7) unter Zugspannung angeordnet ist, um das plattenartige Ventilteil (5) gegen die Außenfläche des Rohres zu pressen, und wobei das Ventilteil mit einem klammerartigen Arm (6) versehen ist, der von einem Betätigungsteil (15) angetrieben wird, dadurch gekennzeichnet, daß das Befestigungselement (7) ein Spiralfederteil ist, das in geschlossener bzw. durchgehender Windung ausgebildet ist und das plattenartige Ventil (5) aus flexiblem, plattenartigen Material enggegen die Außenfläche des Rohres (1) zwingt bzw. preßt.

2. Einrichtung nach Anspruch 1, dadurch gekennzeichnet, daß der klammerartige Arm (6) eine im wesentliche U-förmige Stange ist, deren äußere Enden an dem plattenartigen Ventil (5) befestigt sind, wobei das oder jedes Spannteil (7) innerhalb der U-förmigen Klammer (6) angeordnet ist.

3. Einrichtung nach einem der Ansprüche 1 und 2, die mit einem trichterartigem Auffangelement (8) versehen ist, das der Öffnung (4) in der Wand des Rohres (1) gegenüberliegt, dadurch gekennzeichnet, daß die Klammer (6) oberhalb der Aufnahmeöffnung des Auffangelementes hervorsteht und daß das als Zylinder (15) ausgeführte Antriebselement von dem Auffangelement (8) getragen wird, während es auf den hervorstehenden Abschnitt der Klammer (6) wirkt und wobei eine zweite Spannfeder (21) sich zwischen dem Träger (18) und der Klammer (6) erstreckt.

4. Einrichtung nach Anspruch 3, dadurch gekennzeichnet, daß das Auffangelement (8) auf dem Rohr (1) mittels einer Montageklammer (11) aufgehängt ist.

## Revendications

1. Dispositif pour fermer et ouvrir une ouverture (4) dans la paroi d'un tube (1) ayant une section transversale circulaire, ou sensiblement circulaire, ce dispositif comportant un obturateur (5) constitué par une plaque de forme incurvée, dans lequel au moins un organe de fixation (7) est soumis à une contrainte de traction afin de presser l'obturateur (5) analogue à une plaque incurvée, contre la surface externe dudit tube, et dans lequel cet obturateur comporte un bras (6) analogue à un support, entraîné par un organe d'actionnement (15), caractérisé en ce que l'organe de fixation (7) est un ressort hélicoïdal formant une boucle fermée forçant l'obturateur (5) en un matériau souple analogue à une plaque, étroitement contre la surface externe dudit tube (1).

2. Dispositif suivant la revendication 1, caractérisé en ce que le bras (6) analogue à un support est une tige ayant à peu près la forme d'un U, dont les extrémités externes sont fixées à l'obturateur (5), et dans lequel l'organe de traction (7), ou chaque organe de traction (7) est disposé à l'intérieur du support (6) en forme de U.

3. Dispositif suivant l'une quelconque des revendications 1 et 2, comportant un organe collecteur en forme de trémie (8) disposé en face de l'ouverture (4) dans la paroi du tube (1), caractérisé en ce que le support (6) fait saillie au delà de l'ouverture de réception de l'organe collecteur, l'organe d'actionnement étant constitué par un vérin (15) porté par l'organe collecteur (8) et agissant sur la partie en saillie du support (6), et dans lequel un second ressort de traction (21) s'étend entre le support (18) et le bras (6).

4. Dispositif suivant la revendication 3, caractérisé en ce que l'organe collecteur (8) est suspendu sur le tube (1) au moyen d'organes de suspension (11).
